# EUROPÄISCHE PATENTANMELDUNG

(11) **EP 2 109 309 A2**
(43) Veröffentlichungstag der Anmeldung: **14.10.2009**
(21) Anmeldenummer: 09004078.3
(22) Anmeldetag: 21.03.2009
(51) Int. Cl.: H04N 5/33

(54) **Bildsensorsystem**

(30) Priorität: 07.04.2008 DE 102008017585
(71) Anmelder: Diehl BGT Defence GmbH & Co.KG, 88662 Überlingen (DE)
(72) Erfinder: Barenz, Joachim, 88662 Überlingen (DE); Zehetmair, Frank, 88662 Überlingen (DE); Tholl, Hans Dieter, 88690 Uhldingen-Mühlhofen (DE)
(74) Vertreter: Diehl Patentabteilung

(57) **Zusammenfassung**

Die Erfindung geht aus von einem Bildsensorsystem (2, 48) umfassend einen Detektor (18) mit einer Vielzahl von Detektorelementen (22) und eine Optik (14) mit einem Strahlengang (20) von einem optischen Element auf den Detektor (18).

Eine Kalibrierung des Detektors (18) kann schnell durchgeführt werden, wenn das Bildsensorsystem (2, 48) einen innerhalb des Strahlengangs (20) befestigten Referenzstrahler (30) zum Beleuchten der Detektorelemente (22) aufweist.

## Beschreibung

Die Erfindung betrifft ein Bildsensorsystem umfassend einen Detektor mit einer Vielzahl von Detektorelementen und eine Optik mit einem Strahlengang von einem optischen Element auf den Detektor.

Moderne Bildsensorsysteme basieren in zunehmendem Maße auf Infrarot-Matrixdetektoren, bei denen eine Vielzahl von im infraroten Spektralbereich sensible Detektorzellen zum Aufnehmen einzelner Pixel in einer Matrix nebeneinander angeordnet sind. Solche Infrarot-Matrixdetektoren sind aus Wärmebildgeräten für den Einsatz im Automobilbereich oder in der Inspektion bekannt. Zur Steigerung der Leistungsfähigkeit können die Infrarot-Matrixdetektoren eine Kühlvorrichtung zum Kühlen des Detektors umfassen, mit dem die Detektorzellen vor jedem Einsatz auf eine Temperatur zwischen 50 K und 150 K heruntergekühlt werden können.

Bei leistungsstarken Infrarot-Matrixdetektoren macht sich bemerkbar, dass das Signal der Detektorzellen von der Arbeitstemperatur abhängig ist. Bei schwankender Temperatur entstehen Abbildungen einer gleichen Szenerie in unterschiedlicher Abbildungsqualität. Erschwerend kommen räumliche Inhomogenitäten hinzu, da das Verhalten der Detektorzellen nicht exakt zueinander gleich ist und unterschiedliche Temperaturen unterschiedliche Einflüsse auf einzelne Detektorzellen haben können. Ferner zeigen im infraroten Spektralbereich empfindliche Detektorzellen Nichtlinearitäten der Kennlinie, die ebenfalls von Detektorzelle zu Detektorzelle leicht unterschiedlich sein können. Während sich der Parameter der Arbeitstemperatur durch konstruktive und konzeptionelle Maßnahmen stabilisieren lässt, führen insbesondere räumliche Inhomogenitäten und Nichtlinearitäten zu unerwünschten Bildstörungen.

Zur Verringerung dieser Bildstörungen ist es bekannt, Infrarot-Matrixdetektoren an einer oder mehreren Arbeitstemperaturen und an einem oder mehreren Punkten ihrer Kennlinie zu kalibrieren und die Kalibrierungsergebnisse beispielsweise durch Interpolation auf den gesamten Arbeitsbereich zu übertragen. Allerdings ist eine solche Kalibration von Zeit zu Zeit zu wiederholen, da das zeitliche Verhalten der Detektorzellen üblicherweise nicht stabil ist. Bei besonders hoch auflösenden bzw. empfindlichen Bildsensoren muss eine Nachkorrektur bei jedem neuen Kühlzyklus erfolgen.

Außerdem ist es bekannt, den Detektor während des Betriebs anhand der aufgenommenen Szenerie zu kalibrieren. Einer solchen Kalibration liegt die Annahme zugrunde, dass bei Aufnahme einer bewegten Szenerie die höchsten und niedrigsten Lichtintensitäten und die mittleren Lichtintensitäten auf allen Detektorelementen während eines genügend langen Zeitabschnitts gleich sind. Ausgehend von diesen gleich angenommenen Minima, Maxima und Mittelwerten werden die Detektorelemente entsprechend auf gleiche Ausgangssignale bzw. Mittelwerte kalibriert. Auf diese Weise kann der Detektor während des Betriebs laufend kalibriert werden.

Es ist eine Aufgabe der vorliegenden Erfindung, ein Bildsensorsystem anzugeben, das schnell und genau kalibriert werden kann.

Diese Aufgabe wird durch ein Bildsensorsystem der eingangs genannten Art gelöst, das erfindungsgemäß einen innerhalb des Strahlengangs befestigten Referenzstrahler zum Beleuchten der Detektorelemente aufweist.

Die Erfindung geht hierbei von der Überlegung aus, dass eine szenerie-basierte Kalibrierung - in Abhängigkeit des verwendeten Algorithmus - eine hohe Rechenleistung benötigt, um zu einem guten Ergebnis zu kommen. Oder es wird eine längere Zeit, bzw. die Aufnahme einer größeren Anzahl von Bildern benötigt, bis das System eingeschwungen ist und mit gutem Ergebnis kalibriert werden kann. Auf die hohe Rechenleistung bzw. das Einschwingen kann verzichtet werden, wenn die Detektorelemente mit einem externen Kalibrationsstrahler mit mehreren Strahlungspegeln beleuchtet werden, so dass von einer gleichmäßigen Bestrahlung über alle Detektorelemente ausgegangen werden kann und die erhaltenen Ausgangswerte der Detektorelemente zu den Korrekturdaten verrechnet werden können.

Die Kalibrierung kann besonders schnell durchgeführt werden, wenn der Referenzstrahler im Bildsensorsystem integriert ist. Auf ein Ausrichten des Referenzstrahlers von außen auf den Detektor kann verzichtet werden und die Kalibrierung kann zügig erfolgen. Ist der Referenzstrahler hierbei innerhalb des Strahlengangs befestigt, so kann die für eine Kalibrierung benötigte Zeit noch weiter reduziert werden, da ein Hineinbewegen des Referenzstrahlers in den Strahlengang entfallen kann. Der Referenzstrahler kann hierbei starr zu optischen Elementen der Optik befestigt sein.

Die Detektorelemente sind zweckmäßigerweise Detektorzellen, die jedes für sich einen Bildpunkt (Pixel) erzeugen. Die optischen Elemente der Optik können Strahlformelemente sein, die optische Strahlung entsprechend des Strahlengangs ablenken und formen, z.B. fokussieren. Der Detektor hat seine größte Empfindlichkeit vorteilhafterweise im infraroten Spektralbereich und ist mit einem Kühlsystem verbunden zum Kühlen der Detektorelemente unter zumindest 150 K.

In einer vorteilhaften Ausführungsform der Erfindung ist der Referenzstrahler zum Beleuchten der Detektorelemente während einer Abbildung einer Umgebung durch die Optik auf die Detektorelemente ausgeführt. Die Kalibrierung kann bei einem Abdecken des Lichteinfalls aus der Umgebung oder während eines Augenblicks mit geringem oder keinem Lichteinfall aus der Umgebung durchgeführt werden, und somit sehr schnell und ohne Umschalten von Elementen erfolgen.

Durch die Anordnung des Referenzstrahlers im Strahlengang der Optik kann es durch den Referenzstrahler zu Abschattungen kommen: Der Referenzstrahler vignettiert den Strahlengang mit negativer Auswirkung für die Qualität des Bild der Szenerie auf dem Detektor. Dieser Nachteil kann vermieden werden, wenn der Referenzstrahler in einer Mittenausblendung der Optik angeordnet ist.

Besonders geeignet ist die Erfindung zur Anwendung zusammen mit einer katadioptischen Optik. Der Referenzstrahler kann hier zwischen Spiegeln, insbesondere in einer Mittenausblendung angeordnet sein und das Bildsensorsystem kann besonders kompakt gestaltet werden, was insbesondere für mobile Anwendungen von Vorteil ist. Ist die Optik ein Cassegrain Optiksystem, kann eine kompakte Bauweise mit einer hohen Strahlungsausbeute bei nicht vignettierendem Referenzstrahler erreicht werden.

Um eine Kalibrierung mit gut stimmenden Kalibrationswerten durchführen zu können, sollte der Referenzstrahler die Detektorelemente über die gesamte sensitive Fläche des Detektors gleichmäßig ausleuchten. Um dies zu erreichen, kann der Referenzstrahler ein optisches Element umfassen zum Abbilden eines Abstrahlelements des Referenzstrahlers in eine Ausgangspupille der Optik. Durch die Abbildung in die Ausgangspupille kann ein zum Strahlengang der Optik komplementärer Strahlengang erreicht werden. Dementsprechend kann dort, wo der Strahlengang der Optik fokussiert ist, also auf den Detektorelementen, eine besonders homogene Beleuchtung erfolgen. Das optische Element bzw. Strahlformelement kann eine Linse sein.

Je nach Art des Abstrahlelements als thermischer Strahler, Linienstrahler oder Quantenemitter kann bereits die räumliche Abstrahlcharakteristik inhomogen sein. Weist der Referenzstrahler ein optisches Element auf zum räumlichen Homogenisieren einer inhomogenen Abstrahlung des Referenzstrahlers, so kann trotz einer inhomogenen Abstrahlcharakteristik, z.B. durch eine Modenverteilung einer Diode, eine gleichmäßige Beleuchtung des Detektors bzw. der Detektorelemente erreicht werden. Das optische Element kann ein Strahlformelement sein, dessen Oberfläche beispielsweise als diffraktive Oberfläche, z.B. in Form eines Gitters, ausgestaltet ist.

Eine weitere vorteilhafte Ausgestaltung der Erfindung sieht vor, dass der Referenzstrahler ein Abstrahlelement aufweist, der als thermischer Strahler ausgeführt ist. Als thermischer Strahler ist beispielsweise eine Wolfram-Schicht verwendbar. Durch das weite Spektrum des thermischen Strahlers wird vermieden, dass das Abstrahlspektrum des Abstrahlelements bereits bei geringen thermischen Schwankungen das Empfindlichkeitsspektrum des Detektors verlässt. Ist das Abstrahlelement als dotierter Nichtleiter ausgeführt, so kann es trotz hoher Abstrahlleistung klein sein und hierdurch eine geringe absolute Wärmekapazität bei hoher thermischer Leitfähigkeit haben. Hierdurch kann ein Wechsel in der Abstrahlleistung sehr schnell vollzogen werden, so dass eine Kalibrierung bei verschiedenen Beleuchtungsleistungen sehr schnell vonstatten gehen kann. Als dotierter Nichtleiter ist beispielsweise eine dotierte Diamantschicht vom Typ "DLC", d. h. diamond-like carbon, d. h. amorphes Kohlenstoffmaterial mit einigen Eigenschaften von natürlichem Diamant verwendbar.

In einer anderen Ausgestaltung der Erfindung weist der Referenzstrahler als Abstrahlelement einen Quantenemitter, insbesondere eine Diode auf. Hierdurch können besonders schnelle Referenzflussänderungen erzeugt werden.

Vorteilhafterweise ist das Bildsensorsystem mit einer Regeleinrichtung zum Regeln einer Strahlungscharakteristik - wie beispielsweise der Intensität - des Referenzstrahlers in Abhängigkeit eines Detektorsignals ausgestattet. Es kann die Strahlungscharakteristik an gewünschte Kalibrierpunkte angepasst werden, ohne entsprechende Korrespondenzdaten von Kalibrierpunkten zu Strahlungscharakteristiken hinterlegen zu müssen, die zudem durch äußere Einflüsse oder Alterungen ungenau werden können.

Um eine Abhängigkeit einer Kalibrierung vom Parameter der Integrationsdauer zu vermeiden, ist es vorteilhaft, unterschiedliche Kalibrierungspunkte, z.B. mit unterschiedlichen Füllungsgraden oder Strömen der Detektorzellen, mit gleicher Integrationsdauer zu erzeugen. Hierzu ist die Regeleinrichtung vorteilhafterweise dazu vorgesehen, die Strahlungscharakteristik des Referenzstrahlers so zu regeln, dass nacheinander mehrere unterschiedliche Ausgangscharakteristiken der Detektorelemente bei gleicher Integrationsdauer erreicht werden. Die Ausgangscharakteristiken können z.B. unterschiedliche Füllungsgrade oder Ströme der Detektorzellen sein.

Eine Variation einer Strahlcharakteristik, mit der die Detektorelemente zur Durchführung der Kalibrierung beleuchtet werden, kann ohne Variation der Abstrahlcharakteristik des Referenzstrahlers erreicht werden oder bei Variation der Abstrahlcharakteristik des Referenzstrahlers noch erweitert werden, wenn das Bildsensorsystem eine optische Einrichtung aufweist zur Variation einer Strahlcharakteristik der Beleuchtung der Detektorelemente durch den Referenzstrahler. Die optische Einrichtung kann ein oder mehrere optische Elemente umfassen, z.B. bei Variation eines Strahlwinkels eine Linse, bei Variation einer Wellenlänge einen Filter oder bei zeitlicher Variation der Referenzbestrahlung ein steuerbar angetriebenes Bewegungsmittel zum Bewegen des optischen Elements.

Die Steuerung des Kalibrierens wird zweckmäßigerweise von einem Prozessmittel zum Kalibrieren des Detektors vorgenommen, das insbesondere zum Durchführen einer Mehrpunktkalibrierung mit einer einzigen Integrationsdauer vorgesehen ist.

Vorteilhafterweise ist das Prozessmittel zum Steuern der Bestrahlung der Detektorelemente durch die Strahlungsquelle vorgesehen, also beispielsweise zum Steuern einer Abstrahlcharakteristik des Referenzstrahlers und/oder zum Steuern der optischen Einrichtung zur Variation der Bestrahlung.

Eine räumlich inhomogene Abstrahlcharakteristik des Referenzstrahlers, z.B. durch Moden des Referenzstrahlers kann eine gleichmäßig Beleuchtung des Detektors zunichte machen. Dieser Nachteil kann ausgeräumt oder gemildert werden, wenn das Prozessmittel dazu vorgesehen ist, eine Bewegung eines optischen Elements zu steuern zur Bewegung der Beleuchtung des Referenzstrahlers auf dem Detektor. Durch die Bewegung der Beleuchtung, z.B. ein so genanntes "dithered scanning", kann die Inhomogenität verschmiert und ggf. vollständig ausgeglichen werden. Das bedeutet, dass eine Erhöhung der Homogenität erreichbar ist.

Das Bildsensorsystem ist vorteilhaft dadurch weitergebildet, dass das Prozessmittel dazu vorgesehen ist, zunächst eine Kalibrierung mit Hilfe des Referenzstrahlers vorzunehmen und anschließend eine Nachkalibrierung anhand des Strahlungseinfalls aus einer aufgenommenen Szenerie durchzuführen. Es kann somit eine gleitende, d. h. zeitlich nachführende Nachkalibration vorgenommen werden, nachdem z. B. bereits eine erste Bildsequenz oder ein Bild aufgenommen wurde. Veränderungen im Verhalten des Detektors, z.B. ein Ausfall von Detektorelementen, können kontinuierlich überwacht werden und es kann eine besonders gute Aufnahmequalität des Bildsensorsystems erreicht werden.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

### Es zeigen:

- Fig. 1: ein Bildsensorsystem mit einem Referenzstrahler in einer Mittenausblendung einer Optik,
- Fig. 2: den Referenzstrahler aus Fig. 1 mit einem beweglichen optischen Element,
- Fig. 3: eine schematische Darstellung eines Regelkreises und
- Fig. 4: ein anderes Bildsensorsystem mit einem Referenzstrahler in einer Mittenausblendung einer Optik zum Ausrichten eines Gesichtsfeld.

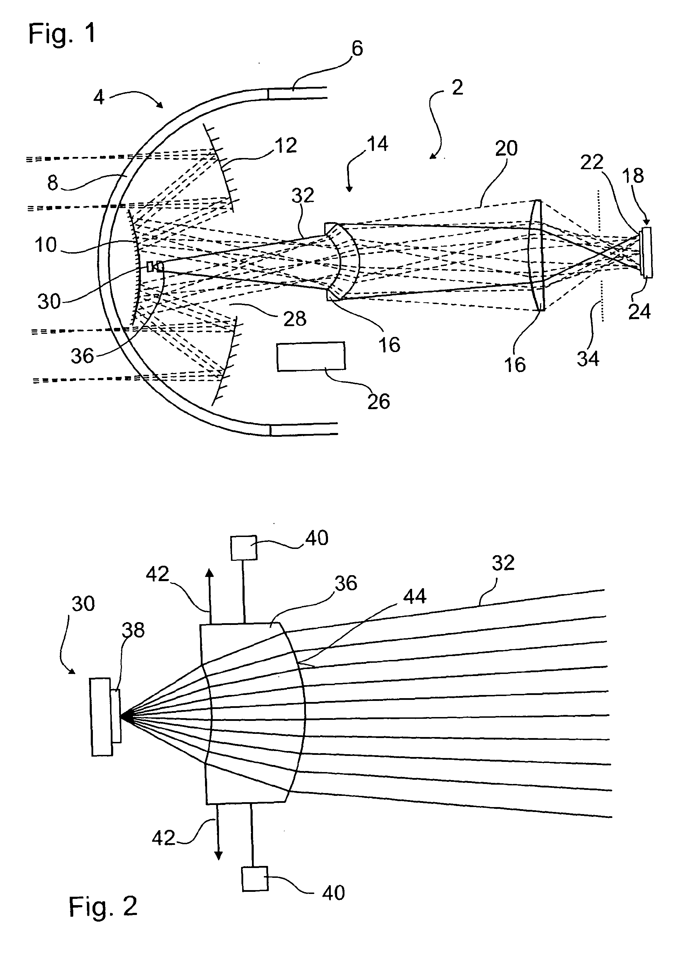

Fig. 1 zeigt ein Bildsensorsystem 2 in einem Flugkörper 4, der anhand eines Gehäuseabschnitts 6 nur schematisch angedeutet ist. Hinter einer für infrarote Strahlung transparenten Kuppel 8 sind zwei Spiegel 10, 12 als optische Elemente einer katadioptischen Optik 14 angeordnet, die ein Cassegrain-Optiksystem bildet. Die Optik 14 bildet mit Hilfe weiterer optischer Elemente 16 eine umgebende Szenerie auf einen Detektor 18 ab, wie durch gestrichelte Linien angedeutet ist, die den Strahlengang 20 der Optik 14 exemplarisch darstellen. Der Detektor 18 ist ein Matrixdetektor, dessen Detektorelemente 22 im infraroten Spektralbereich empfindlich sind. Durch ein Kühlsystem 24 werden die Detektorelemente 22 während ihres Betriebs auf eine Temperatur zwischen 80 K und 120 K gekühlt, wobei die Temperatur der Detektorelemente 22 von einem Prozessmittel 26 überwacht wird.

Der Spiegel 12 ist in seinem mittleren Bereich unterbrochen, wie in der Schnittdarstellung aus Fig. 1 sichtbar ist. Um die hierdurch gebildete Mittenausblendung 28 im Strahlengang 20 ist der äußere Bereich des Spiegels 12 ringförmig herum geführt. Innerhalb der Mittenausblendung 28 - und somit auch innerhalb der die Mittenausblendung 28 umgebenden Strahlengang 20 - ist ein Referenzstrahler 30 unbeweglich zur Optik 14 bzw. den optischen Elementen 16 befestigt, der zum Erzeugen von Referenzstrahlung 32 vorgesehen ist, die ebenfalls in dem Spektralbereich angesiedelt ist, in dem die Detektorelemente 22 empfindlich sind. Durch ein optisches Element 36, das lediglich dem Referenzstrahler 30 zugeordnet ist und das dem Strahlengang 20 aus der Szenerie unzugänglich ist, sowie durch optische Elemente 16 der Optik 14 wird die Referenzstrahlung 32 auf den Detektor 18 gelenkt.

Durch die Anordnung des Referenzstrahlers 30 in der Mittenausblendung 28 ist der Referenzstrahler 30 dazu geeignet, ohne vorherige Bewegung in einen Strahlengang 20 hinein den Detektor 18 zu beleuchten. Es wäre auch eine Beleuchtung des Detektors 18 bzw. von dessen Detektorelementen 22 möglich gleichzeitig mit einer Abbildung einer umgebenden Szenerie durch die Optik 14 auf die Detektorelemente 22. Das optische Element 30 ist zusammen mit der Optik 14 so ausgeführt, dass der Referenzstrahler 30 auf eine Ausgangspupille 34 des Strahlengangs 20 bzw. der Optik 14 abgebildet wird, die in Fig. 1 anhand einer gestrichelten Ebene angedeutet ist. Durch die Fokussierung der Referenzstrahlung 32 in der Ausgangspupille 34, in der Strahlen aus der Szenerie eine große Homogenität haben, ist der Strahlverlauf der Referenzstrahlung 28 komplementär zum Strahlengang 20. Dort, wo der Strahlengang 20 homogen ist, ist die Referenzstrahlung 32 in der Abbildung fokussiert, mit der Wirkung, dass dort, wo der Strahlengang 20 in seiner Abbildung fokussiert ist, nämlich auf den Detektorzellen 22, die Referenzstrahlung 32 besonders homogen ist. Hierdurch wird eine besonders gleichmäßige Verteilung der Referenzstrahlung 32 auf den Detektorzellen 22 erreicht.

Der Referenzstrahler 30 und das optische Element 36 sind in Fig. 2 schematisch und vergrößert dargestellt. Der Referenzstrahler 30 umfasst ein als LED ausgeführtes Abstrahlelement 38, das über eine nicht dargestellte Leitung mit dem Prozessmittel 26 verbunden ist. Das Prozessmittel 26 ist dazu eingerichtet, die Stärke eines Strahlungsflusses vom Abstrahlelement 38 sowie auch dessen Ein- und Ausschalten zu steuern.

Vor dem Referenzstrahler 30 ist das optische Element 36 in Form einer Linse angeordnet, das Strahlung vom Abstrahlelement 38 sammelt und ausrichtet. Über nur schematisch angedeutete Bewegungsmittel 40, die z.B. als Mikromotor oder Piezoelement ausgeführt sein können, ist das optische Element 36 in einer Richtung 42 quer zur Abstrahlachse des Abstrahlelements 38 beweglich. Hierdurch kann die Referenzstrahlung 32, die durch Moden des Abstrahlelements 38 in ihrer räumlichen Verteilung inhomogen sein kann, auf den Detektorelementen 22 verschmiert werden, um so eine größere Homogenität der Referenzstrahlung 32 auf den Detektorelementen 22 zu erreichen. Alternativ oder zusätzlich ist das optische Element 36 bereits an sich zum räumlichen Homogenisieren einer Modenverteilung des Abstrahlelements 38 ausgeführt. Hierzu umfasst das Element 36 auf seiner Oberfläche 44 diffraktive Elemente, z.B. in Form einer Gitterstruktur. Durch eine diffraktive Oberfläche kann der Strahlengang der Referenzstrahlung 32 durch Beugung etwas abgelenkt werden, wodurch eine durch die Abstrahlcharakteristik des Abstrahlelements 38 verursachte räumliche Inhomogenität der Referenzstrahlung 32 vergleichmäßigt wird.

Vor einem Betrieb des Bildsensorsystems 2 zum Abbilden der umgebenden Szenerie auf den Detektor 18 veranlasst das Prozessmittel 26 eine Kalibration des Detektors 18 inklusive einer Defektpixelerkennung. Hierzu wird der Referenzstrahler 30 - z.B. bei einem unterbrochenen oder geringen Strahlungseinfall aus der Szenerie - vom Prozessmittel 26 aktiviert und strahlt daraufhin die Referenzstrahlung 32 ab. Diese wird durch das Element 36 und ggf. zusätzlich durch dessen von dem Prozessmittel 26 gesteuerte Zitterbewegung homogenisiert und trifft gleichmäßig auf dem Detektor 18 auf.

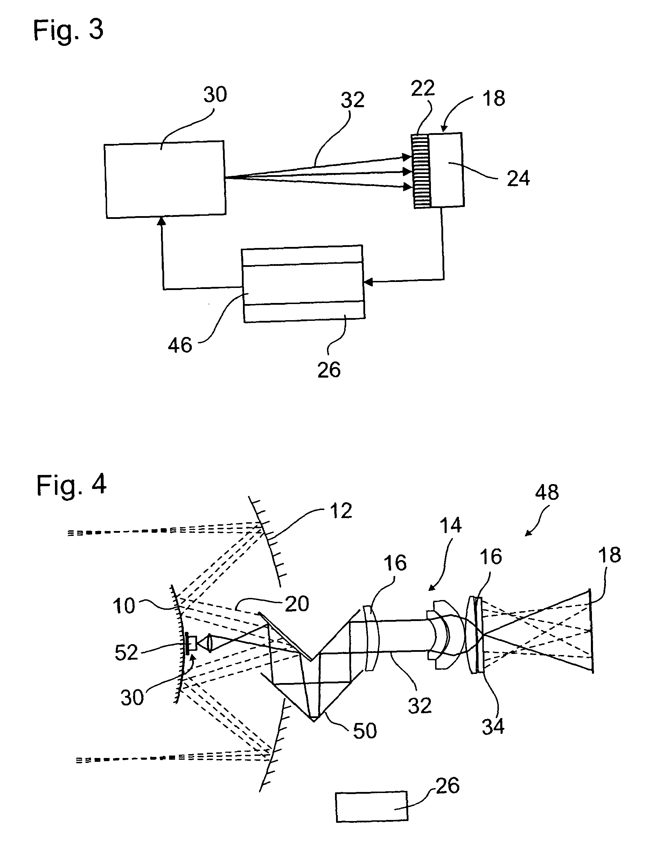

Dieser Vorgang ist schematisch in Fig. 3 dargestellt. Das Prozessmittel 26 führt nun einen Kalibrierprozess zum Kalibrieren des Detektors 18 durch. Hierzu wird der Strom aus den Detektorelementen 22 bei einer festgelegten Integrationsdauer vom Prozessmittel 26 erfasst und die Strahlungsstärke der Referenzstrahlung 32 wird von einem Regler 46 des Prozessmittels 26 durch eine entsprechende Ansteuerung des Referenzstrahlers 30 so lange geregelt, bis der Strom aus den Detektorelementen 22 im Mittel einen vorgegebenen Wert erreicht. Anstelle des Stroms kann der Füllungsgrad der Detektorelemente 22 verwendet werden. Dieser Wert dient als erster Kalibrierungspunkt und das Prozessmittel 26 bestimmt anhand der Ströme aus den Detektorelementen 22 Korrekturfaktoren für die einzelnen Detektorelemente 22. Außerdem ermittelt das Prozessmittel 26 defekte Detektorzellen 22, die beispielsweise keinen oder einen nicht auswertbaren Strom ausgeben. Durch die gleichmäßige Bestrahlung der Detektorelemente 22 sollte der Strom aller Detektorelemente 22 gleich sein. Da das in der Realität durch Ungenauigkeiten nicht der Fall ist, dienen die Korrekturfaktoren zur Beseitigung oder zumindest zur Milderung der Wirkungen der Ungenauigkeiten im Bild der Szenerie.

Ist der Kalibrierungsschritt am ersten Kalibrierungspunkt abgeschlossen, wird die Strahlungsintensität des Referenzstrahlers 30 auf einen zweiten Wert geregelt. Dies geschieht, indem der durchschnittliche Strom der Detektorelemente 22 bei der gleichen Integrationsdauer erfasst wird und die Strahlungsintensität so lange geregelt wird, bis der Strom einem festgelegten zweiten Wert erreicht hat. Nun erfolgt an diesem zweiten Kalibrierungspunkt der nächste Kalibrierungsschritt, in dem die Korrekturfaktoren für die einzelnen Detektorelemente 22 für den zweiten Punkt ermittelt werden. Es können weitere Kalibrierschritte bei anderen Strahlungsintensitäten durchgeführt werden zum Erhalt einer 3-Punkt-Kalibrierung, 4-Punkt-Kalibrierung, usw.

Die Mehrpunktkalibrierung kann anschließend durch Rechenschritte abgeschlossen werden, in denen für jedes Detektorelement 22 die Steigung des Stroms mit der Strahlungsintensität und der Offset ermittelt werden. Es können z.B. alle weiteren Arbeitspunkte mit der gleichen Integrationsdauer per Interpolation ermittelt werden. Nun können weitere Kalibrierschritte mit einem oder vorzugsweise mehreren Intensitätspunkten bei einer oder mehreren anderen Integrationsdauern durchgeführt werden zur Steigerung der Genauigkeit des Detektors 18 bzw. der Bilderzeugung bei weiteren Integrationsdauern.

Danach geht das Bildsensorsystem 2 in den Aufnahmebetrieb, in dem die umgebende Szenerie auf den Detektor 18 abgebildet wird. Nach einer vorgegebenen Betriebsdauer kann eine Nachkalibrierung anhand des Strahlungseinfalls aus der aufgenommenen Szenerie durchgeführt werden, z.B. unter der Annahme, dass die Strahlungs-Minima und -Maxima auf allen Detektorelementen 22 über einen längeren Zeitraum bei bewegter Szenerie gleich sind. Das Stattfinden und die Durchführung dieser weiteren Kalibration werden vom Prozessmittel 26 gesteuert.

Nach einer Betriebspause und einem erneuten Abkühlen und eine erneuten Inbetriebnahme des Detektors 18 kann eine Restinhomogenität der Detektorelemente 22 zueinander verbleiben. Diese kann durch eine erneute Kalibrierung korrigiert werden. Hierbei kann auf eine Kalibrierung bei mehreren Integrationsdauern verzichtet werden und eine deutlich schnellere Kalibrierung mit einer nur Integrationsdauer durchgeführt werden. Mit den ermittelten Daten bzw. Korrekturfaktoren können die zuvor mit anderen Integrationsdauern ermittelten Korrektursätze korrigiert werden. Mit dieser erneuten internen Kalibrierung werden außerdem durch den Abkühlzyklus neu hinzugekommene defekte Detektorelemente 22 erkannt und korrigiert.

Fig. 4 zeigt ein weiteres Bildsensorsystem 48. Die nachfolgende Beschreibung beschränkt sich im Wesentlichen auf die Unterschiede zum Ausführungsbeispiel in den Figuren 1 bis 3, auf das bezüglich gleich bleibender Merkmale und Funktionen verwiesen wird. Im Wesentlichen gleich bleibende Bauteile sind grundsätzlich mit den gleichen Bezugszeichen beziffert und nicht erwähnte Merkmale sind im folgenden Ausführungsbeispiel übernommen, ohne dass sie erneut beschrieben sind. Die Optik 14 umfasst ein rotierbares Spiegelsystem 50, durch den das Gesichtsfeld der Optik 14 innerhalb der umgebenden Szenerie bewegbar ist. Die Austrittspupille 34 liegt innerhalb eines optischen Elements 16 eines Linsensystems der Optik 14. Der Referenzstrahler 30 umfasst einen Temperaturstrahler 52 als Abstrahlelement, der als dotierter Nichtleiter, z.B. in Form einer dotierten Diamantschicht, einer so genannten DLC-Schicht, ausgestaltet ist.

Das Prozessmittel 26 steuert bzw. regelt die Abstrahlungsstärke und Abstrahlungsfrequenz durch eine Spannung, die am Temperaturstrahler anliegt und diesen erhitzt. Durch die dünne Ausführung des Temperaturstrahlers kann eine Änderung der Abstrahlcharakteristik sehr schnell erfolgen, so dass eine Mehrpunktkalibrierung zügig ausgeführt werden kann.

### Bezugszeichenliste

- 2: Bildsensorsystem (von 4)
- 4: Flugkörper
- 6: Gehäuseabschnitt (von 4)
- 8: Kuppel (von 4)
- 10: Spiegel (von 2)
- 12: Spiegel (von 2)
- 14: Optik (von 2)
- 16: Element (von 14)
- 18: Detektor (von 2)
- 20: Strahlengang (von 14)
- 22: Detektorelement (von 2)
- 24: Kühlsystem (von 18)
- 26: Prozessmittel (von 2)
- 28: Mittenausblendung (von 14)
- 30: Referenzstrahler (von 2)
- 32: Referenzstrahlung (von 30)
- 34: Ausgangspupille (von 14)
- 36: Element (von 30)
- 38: Abstrahlelement (von 30)
- 40: Bewegungsmittel (von 30)
- 42: Richtung (von 36)
- 44: Oberfläche (von 36)
- 46: Regler (von 2)
- 48: Bildsensorsystem (von 4)

## Patentansprüche

1. Bildsensorsystem (2, 48) umfassend einen Detektor (18) mit einer Vielzahl von Detektorelementen (22) und eine Optik (14) mit einem Strahlengang (20) von einem optischen Element auf den Detektor (18),
**gekennzeichnet**
**durch** einen innerhalb des Strahlengangs (20) befestigten Referenzstrahler (30) zum Beleuchten der Detektorelemente (22).

2. Bildsensorsystem (2, 48) nach Anspruch 1,
**gekennzeichnet**
**durch** ein Kühlsystem (24) zum Kühlen der Detektorelemente (22), die ihre größte Empfindlichkeit im infraroten Spektralbereich haben.

3. Bildsensorsystem (2, 48) nach Anspruch 1 oder 2,
**dadurch gekennzeichnet,**
**dass** der Referenzstrahler (30) zum Beleuchten der Detektorelemente (22) während einer Abbildung einer Umgebung durch die Optik (14) auf die Detektorelemente (22) ausgeführt ist.

4. Bildsensorsystem (2, 48) nach einem der vorhergehenden Ansprüche,
**dadurch gekennzeichnet,**
**dass** der Referenzstrahler (30) in einer Mittenausblendung (28) der Optik (14) angeordnet ist.

5. Bildsensorsystem (2, 48) nach einem der vorhergehenden Ansprüche,
**dadurch gekennzeichnet,**
**dass** die Optik (14) eine katadioptische Optik (14) ist und/oder dass die Optik (14) ein Cassegrain Optiksystem umfasst.

6. Bildsensorsystem (2, 48) nach einem der vorhergehenden Ansprüche,
**dadurch gekennzeichnet,**
**dass** der Referenzstrahler (30) ein optisches Element (36) umfasst zum Abbilden eines Abstrahlelements (38, 52) des Referenzstrahlers (30) auf eine Ausgangspupille (34) der Optik (14) und/oder dass der Referenzstrahler (30) ein optisches Element (36) umfasst zum räumlichen Homogenisieren einer inhomogenen Abstrahlung des Referenzstrahlers (30).

7. Bildsensorsystem (48) nach einem der vorhergehenden Ansprüche,
**dadurch gekennzeichnet,**
**dass** der Referenzstrahler (30) als Abstrahlelement (52) einen thermischen Strahler aufweist und/oder dass der Referenzstrahler (30) als Abstrahlelement (38) eine Diode aufweist.

8. Bildsensorsystem (2, 48) nach einem der vorhergehenden Ansprüche,
**gekennzeichnet**
**durch** eine Regeleinrichtung zum Regeln einer Strahlungscharakteristik des Referenzstrahlers in Abhängigkeit eines Detektorsignals.

9. Bildsensorsystem (2, 48) nach Anspruch 8,
**dadurch gekennzeichnet,**
**dass** die Regeleinrichtung dazu vorgesehen ist, die Strahlungscharakteristik des Referenzstrahlers (30) so zu regeln, dass nacheinander mehrere unterschiedliche Ausgangscharakteristiken der Detektorelemente (22) bei gleicher Integrationsdauer erreicht werden.

10. Bildsensorsystem (2, 48) nach einem der vorhergehenden Ansprüche,
**gekennzeichnet**
**durch** eine optische Einrichtung zur Variation einer Strahlcharakteristik der Beleuchtung der Detektorelemente (22) durch den Referenzstrahler (30).

11. Bildsensorsystem (2, 48) nach einem der vorhergehenden Ansprüche,
**gekennzeichnet**
**durch** ein Prozessmittel (26) zum Kalibrieren des Detektors (18).

12. Bildsensorsystem (2, 48) nach Anspruch 11,
**dadurch gekennzeichnet,**
**dass** das Prozessmittel (26) zum Durchführen einer Mehrpunktkalibrierung anhand einer einzigen Integrationsdauer vorgesehen ist.

13. Bildsensorsystem (2, 48) nach Anspruch 11 oder 12,
**dadurch gekennzeichnet,**
**dass** das Prozessmittel (26) zum Steuern der Bestrahlung der Detektorelemente (22) durch die Strahlungsquelle vorgesehen ist.

14. Bildsensorsystem (2, 48) nach einem der Ansprüche 11 bis 13,
**dadurch gekennzeichnet,**
**dass** das Prozessmittel (26) dazu vorgesehen ist, eine Bewegung eines optischen Elements (36) zu steuern zur Bewegung der Beleuchtung des Referenzstrahlers (30) auf dem Detektor (18).

15. Bildsensorsystem (2, 48) nach einem der Ansprüche 11 bis 14,
**dadurch gekennzeichnet,**
**dass** das Prozessmittel (26) dazu vorgesehen ist, zunächst eine Kalibration mit Hilfe des Referenzstrahlers (30) vorzunehmen und anschließend eine Nachkalibration anhand des Strahlungseinfalls aus einer aufgenommenen Szenerie durchzuführen.
